Europäisches Patentamt

European Patent Office

Office européen des brevets

(11) Publication number: **0 423 955 A1**

# EUROPEAN PATENT APPLICATION

(21) Application number: **90310528.6**

(51) Int. Cl.5: **G06K 19/04**

(22) Date of filing: **26.09.90**

(30) Priority: **29.09.89 GB 8922041**

(43) Date of publication of application:
**24.04.91 Bulletin 91/17**

(84) Designated Contracting States:
**AT BE CH DE DK ES FR GB GR IT LI LU NL SE**

(71) Applicant: **AMPY AUTOMATION - DIGILOG LTD**
**Frognall**
**Deeping St James Peterborough PE6**
**8RS(GB)**

(72) Inventor: **Payne, Anthony Kenneth Leslie**
**The Willows, Spalding Road, Frognall**
**Deeping St James, Peterborough PE6**
**8SA(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) **Improvements in machine readable cards.**

(57) A generally rectangular machine readable card has a distinctive shaping for example or cut-away corner, at or adjacent one corner which enables the corner to be identified by touch. In conjunction with the generally rectangular shape of the card the shaping enables the orientation of the card to be determined wholly by feel.

The touch identifiable shaping may take any one of a number of forms, such as a cut-away corner, a recess in the card periphery at the corner, a hole in the card adjacent the corner, a serrated edge around the card at the corner, a small area of raised pimples adjacent the corner on one or both faces of the card, a small tab extending in the plane of the card at the corner, or even simply a differently shaped corner, such as a sharp right-angled corner in the case of a card where the other three corners are rounded off.

*Fig. 1*

## Field of the invention

This invention relates generally to machine readable cards, more especially but not exclusively machine readable cards bearing a magnetic stripe, such as cheque guarantee cards, credit cards, cash cards, prepayment cards such as electricity cards, and analogous machine readable cards. Such cards are generally rectangular in shape.

## Background to the invention

Machine readable cards are nowadays in widespread use. However, the actual reading of the card generally requires that the card be inserted into the machine in a particular orientation, i.e. with one particular side facing upwards and with one particular end of the card as the leading end. This can present a problem to blind people, and even to sighted people if the card is to be used in the dark. Especially in the case of an electricity prepayment card, for example, it will often be the case that the card has to be inserted into the meter in the dark.

## The invention

According to the invention, there is provided a generally rectangular machine readable card having a distinctive shaping at or adjacent one corner which enables the corner to be identified by touch, whereby in conjunction with the generally rectangular shape of the card its orientation is determinable wholly by feel.

The touch identifiable shaping may take any one of a number of forms, such as a cut-away corner, a recess in the card periphery at the corner, a hole in the card adjacent the corner, a serrated edge around the card at the corner, a small area of raised pimples adjacent the corner on one or both faces of the card, a small tab extending in the plane of the card at the corner, or even simply a differently shaped corner, such as a sharp right-angled corner in the case of a card where the other three corners are rounded off.

## Description of embodiment

The invention is exemplified with reference to the accompanying drawings, wherein:-

Figure 1 shows one embodiment of machine readable card in accordance with the invention; and

Figure 2 shows some other possible embodiments in fragmentary view.

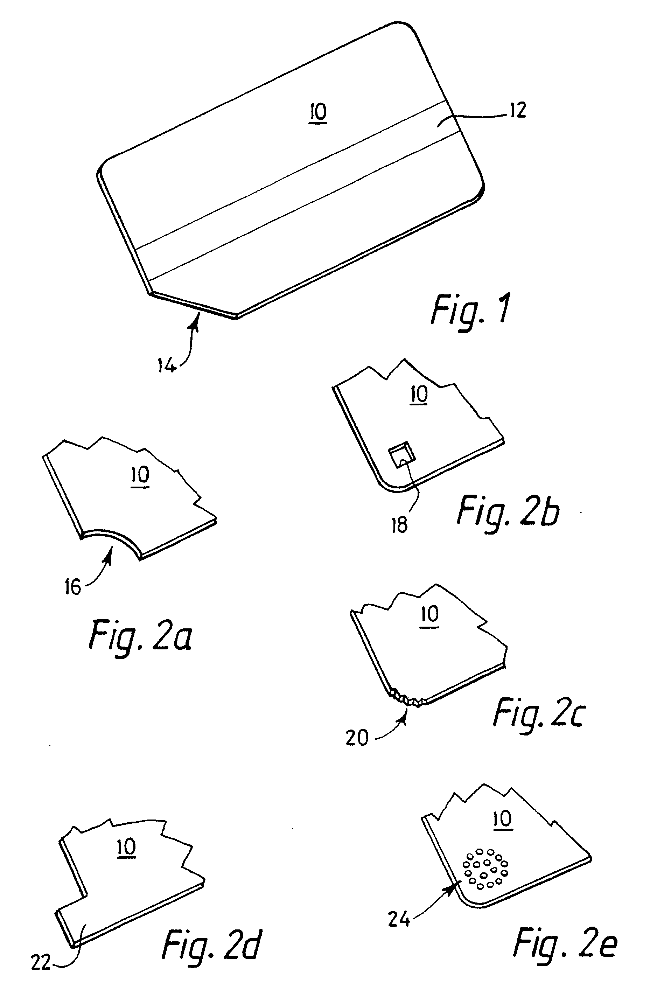

Referring to Figure 1, a generally rectangular machine readable card 10 having a magnetic stripe 12, such as an electricity prepayment card, has one corner cut away, as indicated at 14. The corner 14 is thereby identifiable by touch, whereby in conjunction with the generally rectangular shape of the card, its orientation can be wholly deduced solely by feel, whereby it is known to the user, without being able to see the card, which way up the card has to be held for insertion into the meter or other machine and which end must be inserted first.

Other possible embodiments of the invention having the same practical effect are shown in Figure 2.

In Figure 2a, the card 10 has a recess 16 formed in its periphery, whilst in Figure 2b a hole 18 is formed in the card 10 adjacent the corner. In Figure 2c the card 10 has a serrated edge 20 at the corner.

In the example shown in Figure 2d a small tab 22 projecting in the plane of the card 10 in the direction of its length may be provided to enable identification of the corner by touch. Again, the card 10 may be provided with a small area 24 of raised pimples adjacent the corner on either one or both faces. Another unillustrated possibility is to provide one sharp corner on the card when, as in the case of the card shown in Figure 1, the other three corners are rounded off.

The above examples are by no means exhaustive of the possibilities. The embodiment of touch identifiable shaping which is to be preferred in any particular instance may depend on the overall design of the card, i.e. the general layout and design of the pattern and information on the card faces.

## Claims

1. A generally rectangular machine readable card characterised by a distinctive shaping at or adjacent one corner which enables the corner to be identified by touch, whereby in conjunction with the generally rectangular shape of the card its orientation is determinable wholly by feel.

2. A card according to claim 1 in which the touch identifiable shaping comprises a recess in the card periphery at the corner.

3. A card according to claim 1 or claim 2 in which the touch identifiable shaping comprises a hole in the card adjacent the corner.

4. A card according to claim 1 or claim 3 in which the touch identifiable shaping comprises a serrated edge around the card at the corner.

5. A card according to any of the preceding claims in which the touch identifiable shaping comprises a small area of pimples adjacent the corner on one or both faces of the card.

6. A card according to claim 1 or any of claims 3 to 5 in which the touch identifiable shaping comprises a small tab extending in the plane of the card at the corner.

7. A card according to claim 1 in which the touch identifiable shaping comprises a cut-away corner.

Fig. 1

Fig. 2a

Fig. 2b

Fig. 2c

Fig. 2d

Fig. 2e

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-555150 (K.MUTH) <br> * page 1, right-hand column, line 60 - page 2, left-hand column, line 2 * <br> * page 2, left-hand column, lines 25 - 30; claim 2; figure 2 * <br>--- | 1, 2, 4, 7 | G06K19/04 |
| X | US-A-2687732 (F.L.WASSELL) <br> * column 1, lines 19 - 29 * <br> * column 1, line 54 - column 2, line 11; figure 1 * <br>--- | 1, 2, 6, 7 | |
| X | GB-A-2185144 (CANON) <br> * abstract; figure 4 * <br> * column 2, lines 22 - 32 * <br> * column 3, lines 15 - 29 * <br> * column 3, lines 72 - 73 * <br>--- | 1, 2, 5 | |
| X | US-A-4829168 (T.NAKAHARA) <br> * column 1, lines 5 - 10; figures 4, 8 * <br>--- | 1-3 | |
| X | PATENT ABSTRACTS OF JAPAN <br> vol. 9, no. 148 (P-366)(1871) 22 June 1985, <br> & JP-A-60 24685 (TOSHIBA) 07 February 1985, <br> * the whole document * <br>--- | 1, 7 | TECHNICAL FIELDS SEARCHED (Int. Cl.5) <br><br> G06K |
| X | GB-A-1199967 (WESTERN ELECTRIC) <br> * page 2, right-hand column, lines 105 - 115; figure 1 * <br>--- | 1, 3 | |
| X | DE-A-3608275 (SCHRACK ELEKTRONIK) <br> * figures 1, 5 * <br>----- | 1, 2, 6 | |

The present search report has been drawn up for all claims

| Place of search | Date of completion of the search | Examiner |
|---|---|---|
| BERLIN | 31 JANUARY 1991 | FRITZ S. |